# EUROPEAN PATENT SPECIFICATION

(11) **EP 0 575 387 B1**
(45) Date of publication and mention of the grant of the patent: **04.06.1997**
(21) Application number: 92905907.9
(22) Date of filing: 11.03.1992
(51) Int. Cl.: C07H 1/08, C07H 21/00, C12Q 1/68, C12P 19/34, G01N 1/28, C12M 1/00, C12M 1/24, B01L 1/00, B01L 3/14

(54) **EXTRACTION SYSTEM**
EXTRAKTIONSAPPARAT
SYSTEM D'EXTRACTION

(30) Priority: 11.03.1991 SE 9100725
(43) Date of publication of application: 29.12.1993
(73) Proprietor: MALMQUIST, Mats, S-754 39 Uppsala (SE)
(72) Inventor: MALMQUIST, Mats, S-754 39 Uppsala (SE)
(74) Representative: Mrazek, Werner
(86) International application number: PCT/SE92/00151
(87) International publication number: WO 92/15597

(56) References cited:
- EP-A- 0 338 591
- US-A- 3 432 487
- US-A- 4 997 932

## Description

The present invention concerns an extraction system, in particular the present invention concerns a method to perform extraction of nucleic acids in a closed system and an extraction system to pursue the method.

Extractions of nucleic acids from cells are important procedures in biochemical work. Such extractions are normally accomplished by chemical or physical denaturation of membranes, followed either by precipitation of the nucleic acid, or by permitting it to bind to a medium with affinity to nucleic acids. Subsequently the nucleic acid is washed or else cleaned.

These operations are normally carried out using conventional procedures in an open handling chain, typically using piston pipets and microcentrifuge tubes. A disadvantage with this open handling is that the reaction liquid is repeatedly exposed, giving rise to contamination risks.

Such contamination consists predominantly of air-borne particles carrying microorganisms, fragments of nucleic acids and nucleases. The present invention aims to minimize the risk for this type of contamination during extraction of nucleic acids by handling the components of the process (cells, chemicals and binding medium for nucleic acids) in a closed handling chain.

From DE-A-36 16 309 a method is known for extraction of volatile compounds from gaseous phases. In a closed system, the volatile substances are transferred from the gaseous phase containing vessel by at least one capillary to a second vessel.

In brief, the principle for the present invention is to utilize a medium (a chemical compound or a suspension of particles) being denser than water and having affinity to specific molecules, e.g. nucleic acids, which is serving as a shuttle, that, using centrifugation or sedimentation, alternately is transferred to desired fluid matter (e.g. washing buffer) , alternately is temporarily stored in a capillary tube, at time for exchange of the desired fluid matter.

The invention will now be more precisly described in relation to the enclosed figures, in which
Fig. 1 is a section view of a reaction vessel constituting one of the two parts of an extraction system according to the present invention;
Fig. 2 is a section view of an into the former reaction vessel fitting, second reaction vessel, constituting the second part of the extraction system according to the present invention; and
Fig. 3. is a diagrammatic view of the extraction system mounted together.

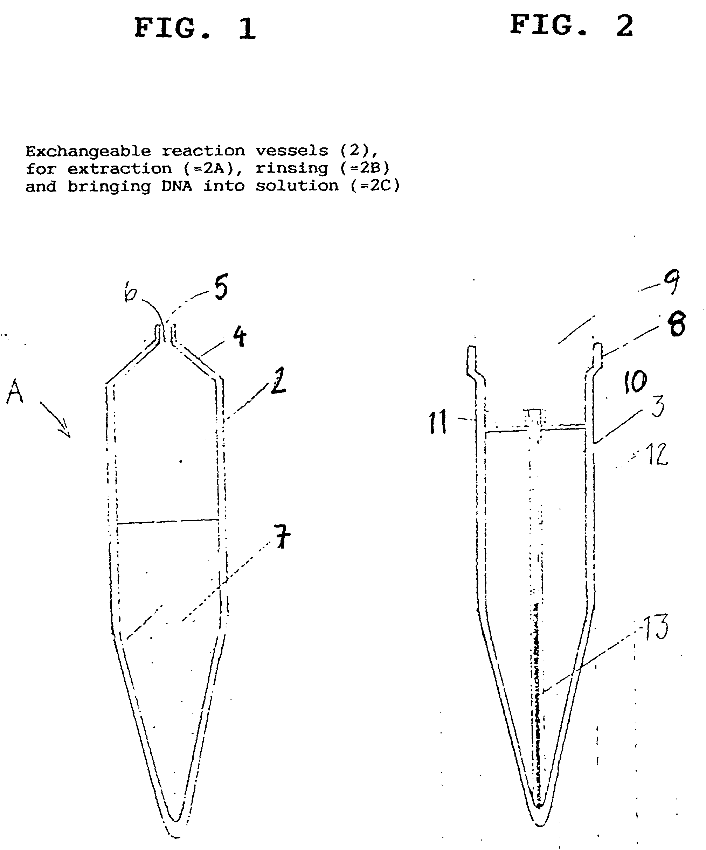

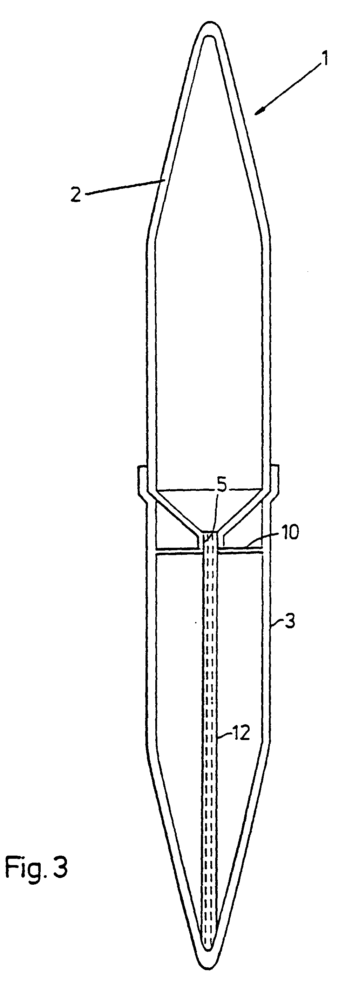

The extraction system according to the present invention is generally designated by reference number 1 in the figures. The extraction system consists of a reaction vessel 2 according to Fig. 1 and a reaction vessel 3 according to Fig. 2, both having configurations permitting them to be fitted together with the bottom ends directed upwards and downwards respectively as illustrated in Fig. 3. This fit is generated by means of the reaction vessel 2 is provided with an upper, convergent section or lid 4 and the reaction vessel 3 is provided with an upper divergent or collared section 8. The angles of the convergent and divergent parties respectively, are the same, leading to a tight fit and, consequently, a closed system when the two reaction vessels 2, 3 are mounted together as shown in Fig. 3. As also shown in Fig. 3 the outer diameter of the reaction vessel 2 corresponds to the inner diameter of the collared section 8 of the reaction vial 3.

In the lid 4 of the reaction vessel 2 is situated one or more (the number corresponds to the number of capillaries 12 below) tube shaped orifices 5 which optionally can be covered by a permeable membrane 6. The reaction vessel 3 is provided with a considerably wider orifice 9 compared with the orifices 5, which orifice 9 has the function to come into the upper section 4 of the reaction vessel 2 as is explained above, c.f. Fig. 3.

Within the reaction vessel 3, one or more capillaries 12 are longitudinally arranged. This capillaries 12 are fixed, preferrably in the center of the reaction vessel 3, as a consequence of its top end being inserted into a bore 11 in a disc, which is situated in the upper section of the reaction vessel 3 precisely beneath the collared section 8, and its lower end being firmly attatched to the bottom of the reaction vessel 3.

As shown in Fig. 3, the tube shaped orifices 5 is dimensioned precisely to fit over the upper section of the capillaries 12 and to establish contact with the disc 10.

Below is described a preferred way to use the extraction system according to the invention, for extraction of nucleic acids.

The capillaries 12 are provided with a medium with affinity to nucleic acids 13 (below termed DNA-binder), which is denser than water. The reaction vessel 3, enclosing the capillaries 12, has the shape of a microcentrifuge tube, and has three functions. One is the function to isolate its content from the environment, which reduces the contamination risk as well as the infection risk in case of extraction of contagious matter, another function is to stabilize the capillary during centrifugation, and a third is to function as a stop collar during centrifugation. Stability is achieved due to the bore 11 in the horizontal disc 10 as described above. The function as a stop collar is achieved due to the upper collared section 8 of the reaction vessel 3, leading to an upside down reaction vessel 2 will be brought to contact with the diverging walls of the collar, according to the description above.

To a reaction vessel 2, here being denoted reaction vessel 2A, is provided a membrane denaturating medium 7 (e.g. concentrated saline solution, lysozyme and/or alkali), followed by the bore 5 in the lid 4 is sealed by a thin membrane 6. To another, not shown, reaction vessel 2, here being denoted reaction vessel 2B is inserted a washing buffer (a saline solution aimed to rinse the DNA-binder, cleaning it from coagulated proteins, cell-fragments and other impurities, without eluating the DNA from the DNA-binder), and to yet another, not shown, reaction vessel 2, here being denoted reaction vessel 2C, is inserted distillated water, whereafter also the reaction vessels 2B and 2C are sealed with thin membranes. The operations described hithereto may be carried out industrially in advance.

The manual handling starts by the sample, e.g. blood, using a syringe, pipet or a measuring capillary is inserted to reaction vessel 2A. This is incubated and the content may be boiled up in order to denaturate nucleases, followed by the capillaries 12 are coupled to the reaction vessel 2 by bringing the tube shaped orifices 5 over the capillaries 12 until their verges are brought into contact with the disc 10. The reaction vessel 2A and the reaction vessel 3 then comprises a closed unit (c.f Fig. 3), which is placed with the bottom of the reaction vessel 2A directed downwards/outwards in a microcentrifuge, followed by a short centrifugation, which transfer the content of each capillary (i.e. DNA-binder) to reaction vessel 2A. After powerful mixing, e.g by vortexing, of the content of the reaction vessel 2A, the DNA will bind to the DNA-binder.

Subsequently, the closed extraction system 1 is turned and placed with the bottom of the reaction vessel 3 downwards, either in a stand for tubes, allowing the DNA-binder 13 with bound DNA to sediment back into the capillaries 12, or in a microcentrifuge with the bottom of the reaction vessel 3 directed downwards/outwards, followed by a short centrifugation in which the DNA-binder 13 with bound DNA is returned to the capillaries 12.

The reaction vessel 2A with its content is disposed, and the reaction vessel 2B containing washing buffer is arranged on the capillaries 12 as described above. After this, the DNA-binder with bound DNA is rinsed by transferring it into reaction vessel 2B containing washing buffer, using centrifugation. The content of the reaction vessel 2B is mixed, e.g. by vortexing, to achieve effective cleaning of bound DNA. Subsequently the DNA-binder with bound DNA is tranferred back to the capillaries 12 by sedimentation or centrifugation according to the same procedure as described above concerning reaction vessel 2A. Thereafter also reaction vessel 2B with its content is disposed.

If further rinsing is desired, the procedure is repeated one or several times from the point of replacement of reaction vessel 2A to the disposing of reaction vessel 2B.

If no further rinsing is desired the reaction vessel 2B is replaced with reaction vessel 2C containing water or other medium bringing DNA into solution. The DNA-binder with bound DNA is centrifuged down into the reaction vessel 2C, which is shaken, in which the DNA will dissociate from the DNA-binder and be brought in solution in the water. The DNA-binder without DNA may, if so is preferred, sediment or be pelleted by centrifugation, optionally to the bottom of reaction vessel 2C or back into the capillaries 12, which thereafter are disposed together with the connected reaction vessel 3.

The DNA now being in solution in the reaction vessel 2C, would, due to the closed handling described above, ensure very reliable results in e.g. PCR.

Preferrably, the DNA in reaction vessel 2C is dispensed using a dispenser according to applicant's copending application, SE9100726.

## Claims

1. A method to perform nucleic acid extraction in a closed system, **wherein**
a) a nucleic acid containing sample is added to a reaction vessel (2A) containing a membrane denaturating medium (7), and these are allowed to incubate;
b) an orifice (5) being situated in the lid (4) of said reaction vessel (2A) is arranged over the upper portion of a capillary (12), containing nucleic acid binding medium (13) (denser than water) and being tightly secured against the bottom of a second reaction vessel (3), said reaction vessels (2A) and (3), respectively, forming a closed unit comprising an open passage from said capillary (12) to the bottom of said reaction vessel (2A);
c) said closed unit is centrifugated with the bottom of said reaction vessel (2A) directed downwards, whereby said nucleic acid binding medium is brought into said reaction vessel (2A);
d) the contents in said reaction vessel (2A) is mixed, whereby nucleic acid in said sample binds to said nucleic acid binder (13);
e) said closed unit is centrifugated with the bottom of said reaction vessel (3) directed downwards, whereby said nucleic acid binding medium with bound nucleic acid is brought into said capillary (12);
f) said reaction vessel (2A) is discarded and replaced with a new reaction vessel (2B) comprising washing buffer and said centrifugations according to c) and e) are repeated with mixing therebetween;
g) said reaction vessel (2B) is discarded and replaced with a new reaction vessel (2C) comprising medium causing the nucleic acid to dissociate from said nucleic acid binding medium (13) and said centrifugation according to c) is repeated, whereby the nucleic acid dissociates from said nucleic acid binder and is brought in solution, and said nucleic acid binder sediments to the bottom of reaction vessel (2C); and
h) said reaction vessels (3) and (2C) are disconnected and said nucleic acid in said reaction vessel (2C) is subjected to further analysis.

2. A method according to claim 1, **wherein** boiling is performed before step b) to denaturate nucleases, if present.

3. A method according to claims 1 or 2, **wherein** washing of bound nucleic acid is repeated with one or more reaction vessels (2B) comprising washing buffer before the final centrifugation of said closed unit comprising said reaction vessel (2C) and said reaction vessel (3).

4. A method according to claims 1, 2 or 3, **wherein** said nucleic acid binding medium in step g) is centrifugated down into said reaction vessel (2C).

5. A method according to claims 1, 2 or 3, **wherein** said nucleic acid binding medium in step g) is centrifugated down into said capillary (12).

6. A closed extraction system, **wherein** it comprises exchangeable reaction vessels (2A, 2B, 2C) and a reaction vessel (3) comprising a centred capillary (12) therein, the reaction vessels (2A, 2B, 2C) and (3), respectively, being constructed to engage with each other to form a closed system comprising an open passage from said capillary (12) to the bottom of said reaction vessel (2A, 2B, 2C).

7. A closed extraction system according to claim 6, **wherein** the engagement between said reaction vessel (2A, 2B, 2C) and said reaction vessel (3) is accomplished in that said reaction vessel (2A, 2B, 2C) is provided with an upper converging portion or lid (4), the inclination of which is adapted to an upper diverging or collared portion (8) on said reaction vessel (3), and wherein said lid (4) is provided a tubular orifice (5) the inner diameter of which is adapted to the outer diameter of said capillary (12).

8. A closed extraction system according to claim 7, wherein said orifice (5) of said reaction vessel (2A, 2B, 2C) is covered by a permeable membrane (6).

9. A closed extraction system according to claims 6, 7 or 8, **wherein** said capillary (12) is centred in said reaction vessel (3) by arranging said capillary (12) in a bore (11) of a disc (10) being arranged in the upper portion of said reaction vessel (3) just beneath said collared portion (8), and wherein its lower end is fixedly arranged in the bottom of said reaction vessel (3).

10. A closed extraction system according to one or more of the claims 6-9, **wherein** said capillary (12) comprises nucleic acid binding medium (13), being denser than water, wherein said reaction vessel (2A) comprises membrane denaturating medium, wherein said reaction vessel (2B) comprises washing buffer, and wherein said reaction vessel (2C) comprises medium causing said bound nucleic acid to dissociate from said nucleic acid binding medium.

## Patentansprüche

1. Verfahren zum Durchführen einer Nukleinsäureextraktion in einem geschlossenen System, wobei
a) eine nukleinsäurehaltige Probe zu einem Reaktionsgefäß (2A) zugegeben wird, das ein membrandenaturierendes Medium (7) enthält, und man diese inkubieren läßt;
b) eine Öffnung (5), die sich in der Abdeckung (4) des Reaktionsgefäßes (2A) befindet, über dem oberen Teil einer Kapillare (12) angeordnet ist, die ein nukleinsäurebindendes Medium (13) (mit einer höheren Dichte als Wasser) enthält und fest am Boden eines zweiten Reaktionsgefäßes (3) befestigt ist, wobei die Reaktionsgefäße (2A) respektive (3) eine geschlossene Einheit bilden, die eine offene Passage von der Kapillare (12) zu dem Boden des Reaktionsgefäßes (2A) umfassen;
c) die geschlossene Einheit zentrifugiert wird, wobei der Boden des Reaktionsgefäßes (2A) nach unten gerichtet ist, wodurch das nukleinsäurebindende Medium in das Reaktionsgefäß (2A) gebracht wird;
d) der Inhalt in dem Reaktionsgefäß (2A) gemischt wird, wobei Nukleinsäure in der Probe an das Nukleinsäurebindemittel (13) bindet;
e) die geschlossene Einheit zentrifugiert wird, wobei der Boden des Reaktionsgefäßes (3) nach unten gerichtet ist, wodurch das nukleinsäurebindende Medium mit gebundener Nukleinsäure in die Kapillare (12) gebracht wird;
f) das Reaktionsgefäß (2A) verworfen wird und durch ein neues Reaktionsgefäß (2B) ersetzt wird, das einen Waschpuffer umfaßt und die Zentrifugationen gemäß c) und e) wiederholt werden, wobei ein Vermischen stattfindet;
g) das Reaktionsgefäß (2B) verworfen und durch ein neues Reaktionsgefäß (2C) ersetzt wird, das ein Medium umfaßt, das die Dissoziation der Nukleinsäure von dem nukleinsäurebindenden Medium (13) bewirkt und die Zentrifugation gemäß c) wiederholt wird, wodurch die Nukleinsäure von dem Nukleinsäurebindemittel dissoziiert und in Lösung gebracht wird und sich das Nukleinsäurebindemittel auf den Boden des Reaktionsgefäßes (2C) absetzt; und
h) die Reaktionsgefäße (3) und (2C) getrennt werden und die Nukleinsäure in dem Reaktionsgefäß (2C) einer. weiteren Analyse unterzogen wird.

2. Verfahren nach Anspruch 3, bei dem vor Schritt b) gegebenenfalls vorhandene Nukleasen durch Kochen denaturiert werden.

3. Verfahren nach Ansprüchen 1 oder 2, bei dem vor der letzten Zentrifugation der geschlossenen Einheit, die das Reaktionsgefäß (2C) und das Reaktionsgefäß (3) umfaßt, das Waschen von gebundener Nukleinsäure mit einem oder mehreren Reaktionsgefäßen (2B), die Waschpuffer enthalten, durchgeführt wird.

4. Verfahren nach Ansprüchen 1, 2 oder 3, bei dem das nukleinsäurebindende Medium in Schritt g) in das Reaktionsgefäß (2C) hinabzentrifugiert wird.

5. Verfahren nach Ansprüchen 1, 2 oder 3, bei dem das nukleinsäurebindende Medium in Schritt g) in die Kapillare (12) hinabzentrifugiert wird.

6. Geschlossenes Extraktionssystem, das austauschbare Reaktionsgefäße (2A, 2B, 2C) und ein Reaktionsgefäß (3) umfaßt, das eine mittige Kapillare (12) umfaßt, wobei die Reaktionsgefäße (2A, 2B, 2C) respektive (3) so konstruiert sind, daß sie miteinander unter Bildung eines geschlossenen Systems in Eingriff stehen, das von der Kapillare (12) zu dem Boden des Reaktionsgefäßes (2A, 2B, 2C) eine offene Passage umfaßt.

7. Geschlossenes Extraktionssystem nach Anspruch 6, bei dem die Verbindung zwischen dem Reaktionsgefäß (2A, 2B, 2C) und dem Reaktionsgefäß (3) erreicht wird, indem das Reaktionsgefäß (2A, 2B, 2C) mit einem oberen konvergierenden Teil oder Abdeckung (4) versehen ist, dessen Neigung an einen oberen divergierenden oder auskragenden Teil (8) auf dem Reaktionsgefäß (3) angepaßt ist, und wobei die Abdeckung (4) mit einer röhrchenförmigen Öffnung (5) versehen ist, deren innerer Durchmesser an den äußeren Durchmesser der Kapillare (12) angepaßt ist.

8. Geschlossenes Extraktionssystem nach Anspruch 7, bei dem die Öffnung (5) des Reaktionsgefäßes (2A, 2B, 2C) mit einer permeablen Membran (6) bedeckt ist.

9. Geschlossenes Extraktionssystem nach Ansprüchen 6, 7 oder 8, bei dem die Kapillare (12) in dem Reaktionsgefäß (3) mittig angeordnet ist, indem die Kapillare (12) in einer Bohrung (11) eines Scheibchens (10) angeordnet ist, das im oberen Teil des Reaktionsgefäßes (3) gerade unterhalb des ausgekragten Teiles (8) angeordnet ist und wobei ihr unteres Ende im Boden des Reaktionsgefäßes (3) befestigt ist.

10. Geschlossenes Extraktionssystem nach einem oder mehreren der Ansprüche 6 - 9, bei dem die Kapillare (12) nukleinsäurebindendes Medium (13) umfaßt, das eine höhere Dichte als Wasser aufweist, wobei das Reaktionsgefäß (2A) membrandenaturierendes Medium umfaßt, wobei das Reaktionsgefäß (2B) Waschpuffer umfaßt und wobei das Reaktionsgefäß (2C) ein Medium umfaßt, das eine Dissoziation der gebundenen Nukleinsäure von dem nukleinsäurebindenden Medium bewirkt.

## Revendications

1. Procédé pour effectuer l'extraction d'un acide nucléique dans un système fermé, dans lequel :
a) un échantillon contenant un acide nucléique est ajouté à un récipient de réaction (2A) contenant un milieu (7) de dénaturation de membrane, et on les laisse incuber;
b) un orifice (5) situé dans le couvercle (4) dudit récipient de réaction (2A) est disposé par-dessus la partie supérieure d'un capillaire (12), contenant un milieu (13) (plus dense que l'eau) de liaison d'acide nucléique et qui est solidement fixé au fond d'un deuxième récipient de réaction (3), lesdits récipients de réaction (2A) et (3), respectivement, formant une unité fermée comprenant un passage ouvert depuis ledit capillaire (12) jusqu'au fond dudit récipient de réaction (2A);
c) ladite unité fermée est centrifugée avec le fond dudit récipient de réaction (2A) dirigé vers le bas, de sorte que ledit milieu de liaison d'acide nucléique est entraîné dans ledit récipient de réaction (2A);
d) le contenu dudit récipient de réaction (2A) est mélangé, de sorte que l'acide nucléique dans ledit échantillon se lie audit agent (13) de liaison d'acide nucléique;
e) ladite unité fermée est centrifugée avec le fond dudit récipient de réaction (3) dirigé vers le bas, de sorte que ledit milieu de liaison d'acide nucléique avec l'acide nucléique lié est entraîné dans ledit capillaire (12);
f) ledit récipient de réaction (2A) est éliminé et remplacé par un nouveau récipient de réaction (2B) comprenant un tampon de lavage, et lesdites centrifugations selon c) et e) sont répétées avec un mélange entre elles;
g) ledit récipient de réaction (2B) est éliminé et remplacé par un nouveau récipient de réaction (2C) comprenant un milieu provoquant la dissociation de l'acide nucléique et du milieu (13) de liaison d'acide nucléique et ladite centrifugation selon c) est répétée, de sorte que l'acide nucléique se dissocie dudit agent de liaison d'acide nucléique et est entraîné en solution, et ledit agent de liaison d'acide nucléique se dépose au fond du récipient de réaction (2C); et
h) lesdits récipients de réaction (3) et (2C) sont séparés et ledit acide nucléique dans ledit récipient de réaction (2C) est soumis à une analyse ultérieure.

2. Procédé selon la revendication 1, dans lequel une ébullition est effectuée avant l'étape b) pour dénaturer les nucléases, si elles existent.

3. Procédé selon la revendication 1 ou 2, dans lequel le lavage de l'acide nucléique lié est répété avec un ou plusieurs récipients de réaction (2B) comprenant un tampon de lavage avant la centrifugation finale de ladite unité fermée comprenant ledit récipient de réaction (2C) et ledit récipient de réaction (3).

4. Procédé selon la revendication 1, 2 ou 3, dans lequel ledit milieu de liaison d'acide nucléique à l'étape g) est centrifugé vers le bas dans ledit récipient de réaction (2C).

5. Procédé selon la revendication 1, 2 ou 3, dans lequel ledit milieu de liaison d'acide nucléique à l'étape g) est centrifugé vers le bas dans ledit capillaire (12).

6. Système d'extraction fermé qui comprend des récipients de réaction échangeables (2A, 2B, 2C) et un récipient de réaction (3) contenant un capillaire (12) centré, les récipients de réaction (2A, 2B, 2C) et (3), respectivement, étant construits pour s'accoupler l'un avec l'autre pour former un système fermé comprenant un passage ouvert depuis ledit capillaire (12) jusqu'au fond dudit récipient de réaction (2A, 2B, 2C).

7. Système d'extraction fermé selon la revendication 6, dans lequel l'accouplement dudit récipient de réaction (2A, 2B, 2C) et dudit récipient de réaction (3) est accompli grâce à la fourniture d'une partie supérieure convergente ou d'un couvercle (4) sur ledit récipient de réaction (2A, 2B, 2C), dont l'inclinaison est adaptée à une partie supérieure divergeante ou à collet (8) sur ledit récipient de réaction (3), et dans lequel ledit couvercle (4) est pourvu d'un orifice tubulaire (5) dont le diamètre intérieur est adapté au diamètre extérieur dudit capillaire (12).

8. Système d'extraction fermé selon la revendication 7, dans lequel ledit orifice (5) dudit récipient de réaction (2A, 2B, 2C) est couvert par une membrane perméable (6).

9. Système d'extraction fermé selon la revendication 6, 7 ou 8, dans lequel ledit capillaire (12) est centré dans ledit récipient de réaction (3) en disposant ledit capillaire (12) dans un alésage (11) d'un disque (10) qui est disposé dans la partie supérieure dudit récipient de réaction (3) juste au-dessous de ladite partie à collet (8), et dans lequel son extrémité inférieure est disposée de manière fixe au fond dudit récipient de réaction (3).

10. Système d'extraction fermé selon une ou plusieurs des revendications 6 à 9, dans lequel ledit capillaire (12) comprend un milieu de liaison d'acide 'nucléique (13), plus dense que l'eau, dans lequel ledit récipient de réaction (2A) comprend un milieu de dénaturation de membrane, dans lequel ledit récipient de réaction (2B) comprend un tampon de lavage, et dans lequel ledit récipient de réaction (2C) comprend un milieu provoquant la dissociation dudit acide nucléique lié et dudit milieu de liaison d'acide nucléique.
